# EUROPÄISCHE PATENTSCHRIFT

(11) **EP 2 250 310 B1**
(45) Veröffentlichungstag und Bekanntmachung des Hinweises auf die Patenterteilung: **20.05.2015**
(21) Anmeldenummer: 09712015.8
(22) Anmeldetag: 11.02.2009
(51) Int. Cl.: D06F 58/20

(54) **HAUSGERÄT ZUM TROCKNEN EINES FEUCHTEN GUTES MIT EINER KÜHLANORDNUNG UND EINER HEIZANORDNUNG**
DOMESTIC APPLIANCE FOR DRYING A HUMID PRODUCT, COMPRISING A COOLING ASSEMBLY AND A HEATING ASSEMBLY
APPAREIL MÉNAGER POUR SÉCHER DES ARTICLES HUMIDES, AVEC UN DISPOSITIF DE REFROIDISSEMENT ET UN DISPOSITIF DE CHAUFFAGE

(30) Priorität: 19.02.2008 DE 102008009784
(43) Veröffentlichungstag der Anmeldung: 17.11.2010
(73) Patentinhaber: BSH Hausgeräte GmbH, 81739 München (DE)
(72) Erfinder: KÜHL, Hans-Detlef, 44229 Dortmund (DE); STOLZE, Andreas, 14612 Falkensee (DE)
(86) Internationale Anmeldenummer: PCT/EP2009/051579
(87) Internationale Veröffentlichungsnummer: WO 2009/103643

(56) Entgegenhaltungen:
- WO-A-2006/029953
- WO-A-2008/018384
- DE-A1- 4 023 000
- DE-A1- 19 738 735

## Beschreibung

Die Erfindung betrifft ein Hausgerät zum Trocknen eines feuchten Gutes (2) mittels eines in eine Prozessluftkanal führbaren Prozessluftstroms, durch welchen durchströmbar sind:
- eine Behandlungskammer mit dem Gut,
- eine Kühlanordnung zum Abkühlen und Auskondensieren des Prozessluftstroms nach Durchströmen der Behandlungskammer, wobei die Kühlanordnung einen ersten Wärmetauscher aufweist, durch welchen Wärme aus dem Prozessluftstrom einem Arbeitsfluid zuführbar ist, und nachgeschaltet
- eine Heizanordnung zum Erwärmen des Prozessluftstroms vor Durchströmen der Behandlungskammer, wobei die Heizanordnung einen zweiten Wärmetauscher aufweist, durch welchen dem Prozessluftstrom aus dem Arbeitsfluid Wärme zuführbar ist, wobei
- das Arbeitsfluid in einer Wärmepumpe geführt wird, die nach einem regenerativen Gaskreisprozess arbeitet und mindestens zwei Verdrängerkolben aufweist, wobei mindestens zwei der Verdrängerkolben mechanisch gekoppelt sind.

Gleichermaßen betrifft die Erfindung ein Verfahren zum Trocknen eines feuchten Gutes mittels eines in einem Prozessluftkanal geführten Prozessluftstroms, durch welchen Prozessluftstrom eine Behandlungskammer mit dem Gut, eine Kühlanordnung zum Abkühlen des Prozessluftstroms und Auskondensieren von Feuchtigkeit aus dem Prozessluftstrom nach Durchströmen der Behandlungskammer und eine Heizanordnung zum Erwärmen des Prozessluftstroms vor Durchströmen der Behandlungskammer durchströmt werden, wobei in der Kühlanordnung Wärme aus dem Luftstrom einem Arbeitsfluid zugeführt wird, und in der Heizanordnung Wärme aus dem Arbeitsfluid dem Prozessluftstrom zugeführt wird, wobei das Arbeitsfluid in einem regenerativen Gaskreisprozess geführt wird, welcher mindestens zwei miteinander mechanisch gekoppelte Verdrängerkolben antreibt.

Ein solches Hausgerät und ein solches Verfahren gehen hervor aus der Internationalen Patentanmeldung WO 2008/018384 A1.

In DE 40 23 000 C2, der DE 197 38 735 C2 oder der WO 2006/029953 A1 ist jeweils ein Hausgerät beschrieben, bei dem die Kühlanordnung und die Heizanordnung zu einer Wärmepumpe gehören, in welcher jedenfalls ein Teil der Wärme, die dem Luftstrom in der Kühlanordnung entzogen wird, dem Luftstrom in der Heizanordnung wieder zugeführt wird.

Gemäß DE 40 23 000 C2 kommt eine Kompressor-Wärmepumpe zum Einsatz, in welcher ein Arbeitsmittel (Kohlendioxid oder chlorierter und/oder fluorierter Kohlenwasserstoff) in gasförmigem Zustand von einem Kompressor komprimiert, dann in einem ersten Wärmetauscher unter Abgabe von Wärme verflüssigt, darauf beim Durchtritt durch eine Drossel entspannt und in einem zweiten Wärmetauscher unter Aufnahme von Wärme verdampft wird. Schließlich gelangt es zum Kompressor zurück. Gemäß DE 197 38 735 C2 kommt eine Wärmepumpe zum Einsatz, bei der ein erstes Arbeitsmittel (Ammoniak) von einem zweiten Arbeitsmittel (Wasser) periodisch absorbiert und desorbiert wird. Gemäß der Schrift WO 2006/029953 A1 kommt eine Wärmepumpe zum Einsatz, in welcher zum Transport der Wärme thermoelektrische Elemente, auch als Peltier-Elemente bezeichnet und aufgebaut mit speziellen Halbleiterwerkstoffen, fungieren.

Aus der DE 1 410 206 A ist eine Waschmaschine bekannt, in welcher Waschgut nicht nur gewaschen, sondern auch getrocknet werden kann. Für die dazu erforderlichen zusätzlichen Einrichtungen zeigt die Schrift mehrere Alternativen. Es können eine elektrische Heizvorrichtung zum Erwärmen eines zur Trocknung von Waschgut eingesetzten Luftstroms und ein einfacher Wärmetauscher zum Abkühlen des erwärmten Luftstroms nach dem Beaufschlagen des Waschguts vorgesehen sein, wobei der Heizer und der Kühler aber auch zu einer Wärmepumpeneinrichtung gehören können. Die Wärmepumpeneinrichtung kann auch derartig ausgestaltet sein, dass sie mit Peltier-Elementen zur Nutzung des thermoelektrischen Effekts arbeitet.

Eine aus einem in der Datensammlung "Patent Abstracts of Japan" zur JP 08 057 194 A gehörigen englischen Kurzauszug hervorgehende Vorrichtung zum Trocknen von Waschgut enthält in ihrem ersten Kanalsystem neben einem Heizer und einem Kühler, welche beide zu einer thermoelektrisch betreibbaren Wärmepumpeneinrichtung gehören, einen dem Kühler vorgeschalteten zusätzlichen Wärmetauscher zur Abkühlung des von dem Waschgut abgeführten Luftstroms und eine dem Heizer nachgeschaltete zusätzliche Heizeinrichtung zum weiteren Erwärmen des Luftstroms vor dem Beaufschlagen des Waschguts.

Aus der Schrift "Wärmetransformationsprozesse ohne Phasenumwandlung" von Dr. Hans-Detlev Kühl, seit dem 26.11.2006 im Internet unter der Adresse http://hdl.handle.net/2003/2798 verfügbar, siehe insbesondere Seiten 1 bis 29, sind ein Stirling-Prozess und ein Vuilleumier-Prozess als Beispiele für einen regenerativen Gaskreisprozess bekannt. Jeder dieser Prozesse ist geeignet zum Einsatz in einer Wärmepumpe oder einem Kältegerät, wobei Anwendungen in der Energietechnik (z. B. bei der Gebäudeheizung) oder zur Stofftrennung (insbesondere Luftverflüssigung und - zerlegung) erwogen werden.

Zum Vuilleumier-Prozess wird auch auf US 1,275,507 des Erfinders Rudolph Vuilleumier verwiesen.

In allen gattungsgemäßen Hausgeräten mit Wärmepumpen, welche nicht den thermoelektrischen Effekt nutzen, erfolgen das Aufnehmen und das Freisetzen von Wärme bei Phasenübergängen im Arbeitsmittel. Es müssen spezifische Bedingungen hinsichtlich Druck und Temperatur eingehalten werden, damit die erforderlichen Phasenübergänge erreicht werden und effektiv genutzt werden können. Dies macht die Anpassung der Wärmepumpen an die in einem Hausgerät zu fordernden Temperaturniveaus unter Umständen schwierig. Die thermoelektrische Wärmepumpe erfordert den Einsatz ungewöhnlicher, teurer Halbleiterkomponenten und stellt spezifische Probleme hinsichtlich Wärmeisolierung und Trockenluftführung, da Wärme dort nur über vergleichsweise kurze räumliche Distanzen gepumpt werden kann. Dies macht die Konstruktion eines entsprechenden Hausgeräts schwierig. Zudem erreicht jede bekannte Wärmepumpe in einem Hausgerät bei ihrer Inbetriebsetzung nur relativ langsam die optimalen Betriebsbedingungen. Dadurch ergibt sich ein erweiterter Zeitbedarf für einen Trocknungsprozess, was von einem Benutzer als sehr nachteilig empfunden werden muss, nicht zuletzt deshalb, weil Hausgeräte mit Wärmepumpen üblicherweise zu sehr hohen Preisen verkauft und mit entsprechend hohen Erwartungen erworben werden.

Aufgabe der vorliegenden Erfindung ist es, eine Möglichkeit zur Trocknung eines feuchten Guts im Haushalt bereitzustellen, welche mit einem umweltfreundlichen, insbesondere natürlichen Kältemittel, unter Beachtung einer kompakten Bauweise und ausreichender Entfeuchtungsleistung bereitzustellen.

Diese Aufgabe wird mittels eines Hausgeräts nach Anspruch 1 und mittels eines Verfahrens nach Anspruch 19 gelöst. Vorteilhafte Ausgestaltungen sind insbesondere den abhängigen Ansprüchen entnehmbar.

Das Hausgerät ist zum Trocknen eines feuchten Gutes eingerichtet und ist insbesondere ein Wäschetrockner, z. B. als Einzeltrockner oder in einen Vollwaschtrockner integriert. Dazu weist das Hausgerät einen Prozessluftkanal auf, in dem ein Prozessluftstrom führbar ist, insbesondere mittels eines Prozessluftgebläses. Von dem Prozessluftstrom ist eine Behandlungskammer, z. B. eine Wäschetrommel, mit dem Gut, z. B. einem Wäscheposten, durchströmbar. Das Hausgerät weist zudem eine von der Prozessluft durchströmbare Kühlanordnung zum Abkühlen und Auskondensieren des Prozessluftstroms nach Durchströmen der Behandlungskammer auf, wobei die Kühlanordnung mindestens einen ersten Wärmetauscher, z. B. einen Kondensator, aufweist, durch welchen Wärme aus dem Prozessluftstrom einem Arbeitsfluid, z. B. einem Gas oder einer Flüssigkeit, zuführbar ist. Das Hausgerät weist außerdem eine Heizanordnung zum Erwärmen des Prozessluftstroms vor Durchströmen der Behandlungskammer auf, wobei die Heizanordnung mindestens einen zweiten Wärmetauscher aufweist, durch welchen dem Prozessluftstrom aus dem Arbeitsfluid Wärme zuführbar ist.

Das Arbeitsfluid wird in einer Wärmepumpe geführt wird, die nach einem grundsätzlich regenerativen Gaskreisprozess arbeitet und mindestens zwei Verdrängerkolben aufweist. Ferner sind mindestens zwei der Verdrängerkolben mechanisch gekoppelt.

Mittels der mechanischen Kopplung wird erreicht, dass sich eine bestimmte, z. B. feste oder im Wesentlichen feste, Phasenbeziehung zwischen den Verdrängerkolben mit geringem baulichem Aufwand und auf eine kompakte Weise erreichen lässt. Zudem ist eine Beeinflussung der Kolbenbewegung so auf eine besonders einfache Weise möglich.

Es wird bevorzugt, wenn der regenerative Gaskreisprozess einen Vuilleumier-Gaskreisprozess umfasst. Das Arbeitsfluid ist dann ein Gas, bevorzugt Helium. Dabei kann der Vuilleumier-Gaskreisprozess als ein reiner Vuilleumier-Gaskreisprozess ausgelegt sein oder als ein kombinierter Vuilleumier-Gaskreisprozess, z. B. ein Vuilleumier-Gaskreisprozess, der mit einem Stirling-Gaskreisprozess kombiniert ist.

Es kann ein Hausgerät bevorzugt sein, bei dem zwei der Verdrängerkolben als Teil eines Freikolben-Schwingsystems ausgebildet sind. Dies ergibt, die Möglichkeit, eine besonders kompakte und sich besonders einfach auf unterschiedliche Arbeitspunkte einstellende Anordnung zu schaffen.

Vorzugsweise sind die, insbesondere zwei, Verdrängerkolben über mindestens ein Federelement gekoppelt.

Es wird dann bevorzugt, wenn das Federelement eine Federkonstante zwischen 3 N/mm und 15 N/mm, insbesondere zwischen 6 N/mm und 7 N/mm, aufweist.

Es wird auch bevorzugt, wenn das Federelement in einem ersten, kalten Verdrängerkolben aufgenommen ist, da so Leistungsverluste selbstständig, d. h., ohne äußeren Erreger ausgeglichen werden können.

Es ist zum effektiven Betrieb vorteilhaft, wenn ein erster, kalter Verdrängerkolben ein Gewicht zwischen 3 Kg und 6 Kg, insbesondere zwischen 4 Kg und 5 Kg, aufweist, wenn ein zweiter, heißer Verdrängerkolben ein Gewicht zwischen 1 Kg und 2 Kg aufweist, wenn ein Kolbendurchmesser der Verdrängerkolben zwischen 75 mm und 200 mm, insbesondere zwischen 100 mm und 150 mm, beträgt, wenn ein Kolbenhub der Verdrängerkolben zwischen 25 mm und 75 mm, insbesondere zwischen 30 mm und 50 mm, beträgt und / oder wenn ein Mitteldruck an den Verdrängerkolben zwischen 20 bar und 75 bar, insbesondere zwischen 30 bar und 50 bar, beträgt.

Zum Ausgleich von Leistungsverlusten ohne Verwendung eines äußeren Erregers wird ein Hausgerät (besonders bevorzugt, bei dem ein erster, kalter Verdrängerkolben eine Aussparung zur zumindest teilweisen Aufnahme eines in einem Arbeitsvolumen ortfest angeordneten Körpers aufweist, wobei der Körper in Abhängigkeit von einem Hub des kalten Verdrängerkolbens in die Aussparung eintaucht.

Es wird insbesondere bevorzugt, wenn der Körper eine zylindrische Grundform aufweist, insbesondere mit einem Durchmesser zwischen 25 mm und 75 mm, speziell zwischen 40 mm und 50 mm. Jedoch sind auch andere Grundformen möglich, z. B. quaderförmig.

Alternativ können mehrere, insbesondere zwei, Verdrängerkolben mittels eines Koppelgetriebes miteinander gekoppelt sein. Diese haben den Vorteil, dass sie besser anschwingen als das Freikolben-Schwingsystem, welches dazu häufig einen Erreger benötigt.

Es wird dann zum Ausgleich von Leistungsverlusten bevorzugt, wenn dass Koppelgetriebe extern antreibbar ist, z. B. mittels einer Erregereinheit, z. B. eines drehzahlregelbaren Motors zum Antrieb der Welle des Koppelrads.

Es wird zur Einstellung eines Arbeitspunkts der Wärmepumpe, z. B. zur Anpassung an einen Trocknungsgrad und / oder eine Beladung, bevorzugt, wenn das Koppelgetriebe frequenz- bzw. drehzahlgeregelt antreibbar ist, z. B. durch einen frequenzregelbaren Erreger, z. B. einem drehzahlregelbaren Motor.

Es wird zur Erreichung einer kompakten Bauweise bevorzugt, wenn die Verdrängerkolben in einem gemeinsamen Zylinder laufen.

Bevorzugt kann ferner ein Hausgerät sein, bei dem die Verdrängerkolben kollinear laufen. Alternativ können die Verdrängerkolben zueinander angewinkelt laufen, z. B. unter einem Winkel von 90°.

Es wird zur raumoptimierten Anordnung bevorzugt, falls die Kolben in einer Bodengruppe angeordnet sind.

Das Verfahren zum Trocknen eines feuchten Gutes mittels eines in einem Prozessluftkanal geführten Prozessluftstroms, durch welchen Prozessluftstrom eine Behandlungskammer mit dem Gut, eine Kühlanordnung zum Abkühlen des Prozessluftstroms und Auskondensieren von Feuchtigkeit aus dem Prozessluftstrom nach Durchströmen der Behandlungskammer und eine Heizanordnung zum Erwärmen des Prozessluftstroms vor Durchströmen der Behandlungskammer durchströmt werden, wobei in der Kühlanordnung Wärme aus dem Luftstrom einem Arbeitsfluid zugeführt wird, und in der Heizanordnung Wärme aus dem Arbeitsfluid dem Prozessluftstrom zugeführt wird, umfasst, dass das Arbeitsfluid in einem regenerativen Gaskreisprozess geführt wird, welcher mindestens zwei Verdrängerkolben antreibt, und dass das Arbeitsfluid mindestens zwei miteinander mechanisch gekoppelte Verdrängerkolben antreibt.

Dabei umfasst auch der regenerative Gaskreisprozess einen Vuilleumier-Gaskreisprozess. Die für das Hausgerät aufgeführten bevorzugten Ausführungsformen sind analog auch für das Verfahren bevorzugt.

Ein Trockner als Hausgerät weist z. B. einen Prozessluftkreislauf auf, der gebildet wird durch die Trommel mit Wäsche, der Wärmepumpe und einem Prozessluft-Gebläse. Die Vuilleumier-Wärmepumpe arbeitet nach dem Prinzip eines thermisch angetriebenen regenerativen Gas-Kreisprozesses ähnlich dem Stirling-Prozess. Sie weist in ihrer Reinform ein konstantes Gasvolumen auf, welches durch mindestens zwei mechanisch gekoppelte, linear angetriebene oder freischwingende Verdrängerkolben in drei periodisch veränderliche Teilvolumina mit unterschiedlichen Temperaturniveaus unterteilt wird. Die Volumina sind über zwei Regeneratoren miteinander verbunden. Durch die Beheizung des heißen Arbeitsvolumens (z. B. elektrisch oder mit Gas) entstehen so zwei weitere Temperaturniveaus, die zur Auskopplung der Kondensationswärme aus dem Trocknungsprozess und zur Wiedereinkopplung auf dem höheren Temperaturniveau genutzt werden können. Diese beiden Arbeitsvolumina stehen zu diesem Zweck über Wärmetauscher mit der Prozessluft im Kontakt.

In den folgenden Figuren werden Ausführungsbeispiele der Erfindung schematisch genauer erläutert. Gleiche oder gleichwirkende Elemente sind in den Figuren mit gleichen Bezugszeichen versehen worden.
- FIG 1: zeigt eine Skizze eines Hausgeräts mit einer Vuilleumier-Wärmepumpe gemäß einer ersten Ausführungsform;
- FIG 2: zeigt eine Prinzipskizze von drei Bauformen einer Vuilleumier-Wärmepumpe mit über ein Koppelgetriebe mechanisch gekoppelten Kolben nach H.-D. Kühl;
- FIG 3: zeigt eine Skizze eines Hausgeräts mit einer Vuilleumier-Wärmepumpe gemäß einer zweiten Ausführungsform;
- FIG 4: zeigt in Aufsicht eine Vuilleumier-Wärmepumpe nach der in FIG 3 gezeigten Ausführungsform für einen Wäschetrockner;
- FIG 5: zeigt in Schrägansicht die Vuilleumier-Wärmepumpe aus FIG 4.

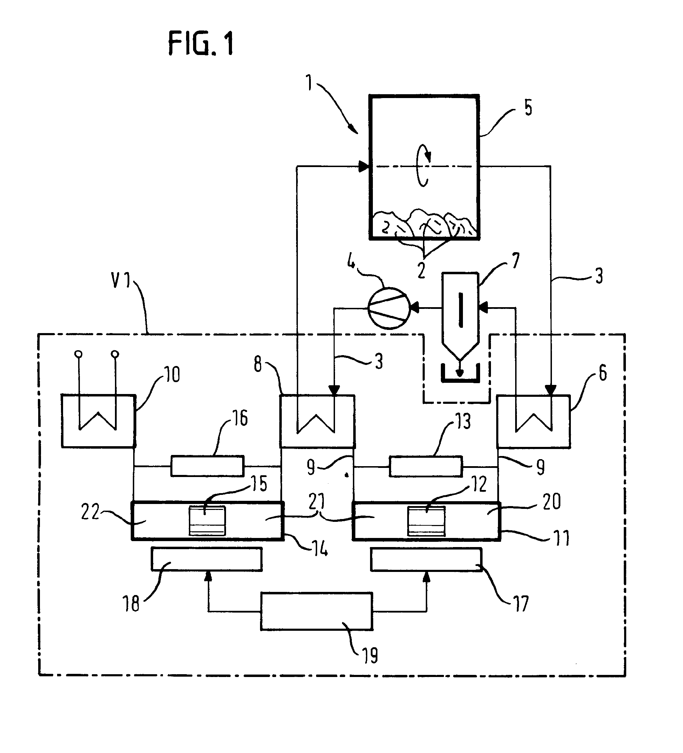

FIG 1 zeigt ein Hausgerät 1 in Form eines Wäschetrockners 1 zum Trocknen eines feuchten Wäschepostens 2. Der Wäschetrockner 1 weist einen im Wesentlichen geschlossenen Prozessluftkanal 3 auf, in welchem ein Prozessluftstrom geführt wird. Dazu wird der Prozessluftstrom von einem Gebläse 4 angetrieben. Der Wäscheposten 2 ist in einer Behandlungskammer in Form einer drehbaren Wäschetrommel 5 angeordnet. Nachdem der Prozessluftstrom die Trommel 5 durchsetzt hat, gelangt er im Prozessluftkanal 3 zu einem ersten Wärmetauscher 6, welcher als Kondensator 6 dient. Darin wird der Prozessluftstrom soweit abgekühlt, dass Feuchtigkeit, welche die Prozessluft in der Trommel 5 vom Wäscheposten 2 aufgenommen hat, auskondensiert. Ein dem Kondensator 6 nachgeordneter Feuchtigkeitsabscheider 7 dient zum Abscheiden der auskondensierten Feuchtigkeit. Abgeschiedene Feuchtigkeit wird gesammelt und entsorgt. Es entspricht herkömmlicher Praxis, den Kondensator 6 und den Feuchtigkeitsabscheider 7 in einem Bauteil zusammenzufassen; in den vorliegenden Figuren sind diese Komponenten vor allem der Klarheit halber separat gezeichnet. Hinter dem Kondensator 6 und dem Feuchtigkeitsabscheider 7 befindet sich im Prozessluftkanal 3 das Gebläse 4, auf welches im Prozessluftkanal 3 ein zweiter Wärmetauscher 8 folgt, welcher als Heizer 8 für den Prozessluftstrom ausgebildet ist. Nachdem der Prozessluftstrom den zweiten Wärmetauscher 8 durchlaufen hat und dabei erwärmt wurde, gelangt er zurück in die Trommel 5, wo er aus der feuchten Wäsche 2 erneut Feuchtigkeit aufnehmen kann.

Der erste Wärmetauscher 6 und der zweite Wärmetauscher 8 sind hier Bestandteile einer Vuilleumier-Wärmepumpe V1 bzw. 6, 8 bis 19; Grundsätze und Ausführungsbeispiele solcher Vuilleumier-Wärmepumpen (wie auch anderer Wärmepumpen mit regenerativen Gaskreisprozessen) sind insbesondere der Schrift von H.-D. Kühl entnehmbar, auf die weiter unten erneut Bezug genommen wird.

Die Vuilleumier-Wärmepumpe V1 bzw. 6, 8 bis 19 wird nachfolgend im Einzelnen beschrieben. Sie umfasst einen Arbeitsgaskanal 9, in welchem ein geeignetes und bei den gegebenen Temperaturen möglichst weitgehend einem idealen Gas entsprechendes Arbeitsgas, hier: Helium, als Kältemittel eingeschlossen ist. Der Arbeitsgaskanal 9 durchströmt den ersten ('kalten') Wärmetauscher bzw. Kondensator 6, welcher auf einem niedrigen Temperaturniveau als Wärmesenke fungiert, wobei und indem er aus dem Prozessluftstrom im Prozessluftkanal 3 Wärme wie beschrieben aufnimmt. Im Inneren des Arbeitsgaskanals 9 befindet sich der zweite ('warme') Wärmetauscher 8, welcher auf einem mittleren Temperaturniveau als Wärmequelle fungiert, wobei und indem er in beschriebener Weise dem Luftstrom im Prozessluftkanal 3 Wärme zuführt. An einem zweiten Ende des Arbeitsgaskanals 9 befindet sich ein Heizer 10, welcher elektrisch betrieben wird und das zu ihm gelangte Arbeitsgas auf ein hohes Temperaturniveau aufheizt. Die derart in das Arbeitsgas hinein gelangende Wärme ist diejenige Energie, welche den regenerativen Vuilleumier-Arbeitsgaskreisprozess in dem Arbeitsgaskanal 9 antreibt.

Zwischen dem ersten Wärmetauscher 6 und dem zweiten Wärmetauscher 8 weist der Arbeitsgaskanal 9 einen ersten Zylinder 11 auf, in welchem ein erster Kolben 12 beweglich ist. Parallel geschaltet zu dem ersten Zylinder 11 ist ein erster Regenerator 13, welcher ein von dem Arbeitsgas weitgehend frei durchströmbarer erster Wärmespeicher 13 ist. Indem der erste Kolben 12 bewegt wird, wird das Arbeitsgas durch den ersten Regenerator 13 hindurchgedrückt und kann so von dem ersten Wärmetauscher 6 zum zweiten Wärmetauscher 8 oder zurück transportiert werden. Dabei gibt es eventuelle überschüssige Wärme an den ersten Regenerator 13 ab oder nimmt eventuell fehlende Wärme aus diesem auf, und zwar je nachdem, in welcher Richtung es den ersten Regenerator 13 durchströmt. Das an den ersten Wärmetauscher (Kondensator) 6 angeschlossene Arbeitsvolumen 20 wird auch als "kaltes" Arbeitsvolumen bezeichnet; das an den zweiten Wärmetauscher (Wärmequelle) 8 angeschlossene Arbeitsvolumen 21 wird entsprechend als "warmes" Arbeitsvolumen bezeichnet.

Zwischen dem zweiten Wärmetauscher 8 und dem Heizer 10 weist der Arbeitsgaskanal 9 einen zweiten Zylinder 14 mit darin beweglichem zweitem Kolben 15 sowie, wiederum parallel geschaltet zu dem zweiten Zylinder 14, einen zweiten Regenerator 16 auf. Durch Verschieben des zweiten Kolbens 15 wird Arbeitsgas durch den Regenerator 16 vom dem zweiten Wärmetauscher 8 zum Heizer 10 oder zurück transportiert, wobei es wiederum überschüssige Wärme abgibt oder fehlende Wärme aufnimmt. Das an den ersten Wärmetauscher (Kondensator) 6 angeschlossene Arbeitsvolumen 21 wird auch hier als "warmes" Arbeitsvolumen bezeichnet; das an den Heizer 10 angeschlossene Arbeitsvolumen 21 wird als "heißes" Arbeitsvolumen bezeichnet.

Zum Betreiben des Vuilleumier-Prozesses mit dem Arbeitsgas werden periodische, aufeinander abgestimmte und in wohlbestimmter Phasenbeziehung zueinander stehende Bewegungen des ersten Kolbens 12 und des zweiten Kolbens 15 verwendet. Zu diesem Zweck sind ein erster Linearantrieb 17 für den ersten Kolben 12 und ein zweiter Linearantrieb 18 für den zweiten Kolben 15 vorgesehen, welche durch eine Steuereinrichtung 19 gesteuert werden und die Kolben 12 und 15 berührungslos verschieben. Dies ist insbesondere deshalb in günstiger Weise möglich, weil der Vuilleumier-Prozess ausschließlich mit der vom Heizer 10 gelieferten Wärmeenergie betrieben wird und das Einbringen mechanischer Energie über die Kolben 12 und 15 nur insoweit erforderlich ist, als das Arbeitsgas zwischen dem ersten Wärmetauscher 6, dem zweiten Wärmetauscher 8 und dem Heizer 10 hin und her befördert werden muss. Dabei müssen mehr oder weniger nur Trägheits- und Reibungskräfte des strömenden Arbeitsgases sowie der sich bewegenden Kolben 12 und 15 überwunden werden. Insbesondere ist es nicht erforderlich, dass die Linearantriebe 17 und 18 die Kolben 12 und 15 einander berühren; vielmehr ist es tatsächlich möglich, die Kolben 12 und 15 berührungsfrei durch die Linearantriebe 17 und 18 zu führen. Entsprechend ist es nicht erforderlich, bewegte Komponenten in gedichteter Weise aus dem Arbeitsgaskanal 9 herauszuführen; der Arbeitsgaskanal 9 bildet vielmehr eine in sich vollkommen geschlossene und insoweit starre Einheit, die dementsprechend einfach, zuverlässig und dauerhaft gedichtet werden kann - auch dann, wenn das Arbeitsgas unter einem Druck bis zu mehreren 100 bar steht. Für die Betriebssicherheit und auch die Langlebigkeit des Hausgerätes 1 ist dies von hoher Bedeutung.

Der Betrieb der Wärmepumpe V1 bei einem typischen Trocknungsprozess, für welchen eine Zeit in der Größenordnung einer Stunde anzusetzen wäre, erfolgt durch wiederholtes Verschieben des Arbeitsgases innerhalb des Arbeitsgaskanals 9, wobei die Kolben 12 und 15 zyklisch und zueinander phasenverschoben mit einer Periode in der Größenordnung einer Zehntelsekunde bewegt werden. Ein bevorzugtes Verhältnis zwischen der Dauer des Trocknungsprozesses und der Dauer der Periode des regenerativen Gasprozesses liegt damit zwischen 10.000 und 100.000, besonders bevorzugt zwischen 30.000 und 40.000.

Falls die Dimensionierung der Wärmepumpe V1 mit ihrer Kolbenfrequenz nur auf einen stationären Betrieb des Trockners mit voller Beladung ausgelegt ist, kann das Erreichen der stationären Phase oder die Trocknung bei Unterbeladung problematisch sein. Um dies zu vermeiden, werden hier Reibungsverluste mittels einer Frequenzanpassung des (frequenzgeregelten) Linearantriebs ausgeglichen, so dass eine effiziente Anpassung des Arbeitspunktes an den Betriebszustand des Trockners 1 möglich ist.

Dieses Hausgerät 1 bietet mit dem Einsatz eines regenerativen Gaskreisprozesses die Möglichkeit der Verwendung eines unter Funktions- und Sicherheitsaspekten unkritischen Arbeitsmittels. Außerdem können in der entsprechenden Wärmepumpe hohe Wärmepumpfaktoren bei niedrigen Temperaturniveaus erreicht werden. Mit der Vuilleumier-Wärmepumpe kann bei einer möglichst hohen Temperaturdifferenz zwischen dem hohen und dem niedrigen Temperaturniveaus sowie einer vergleichsweise geringen Temperaturdifferenz zwischen den mittleren und dem niedrigen Temperaturniveaus eine hohe Leistungszahl der Wärmepumpe erreicht werden. Damit besteht die Möglichkeit, ein Hausgerät in Form eines Wäschetrockners zu schaffen, welchem eine Energieeffizienzklasse A zugeordnet werden kann.

Entsprechende Kriterien können berücksichtigt werden durch die Wahl des Arbeitsgases und des Drucks, mit welchem dieses in der Wärmepumpe vorliegen muss. Auch die Gestaltung der Wärmespeicher in der Wärmepumpe kann deren betriebliche Eigenschaften günstig beeinflussen.

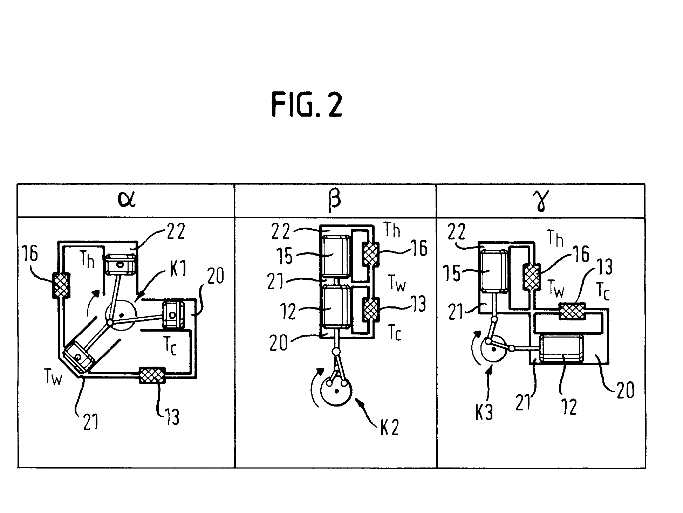

FIG 2 zeigt eine Prinzipskizze von drei Bauformen einer Vuilleumier-Wärmepumpe nach H.-D. Kühl, Seite 23. Dabei sind die Kolben über ein gemeinsames Koppelgetriebe mechanisch miteinander verbunden.

Bei der in der Praxis nicht um Vordergrund stehenden α-Bauform sind drei Kolben sternförmig über ein Koppelgetriebe K1 mechanisch miteinander verbunden, welches eine Koppelstange je Kolben an einer drehbaren Scheibe zusammenführt. Durch das Koppelgetriebe K wird eine Phasenbeziehung der Kolben untereinander festgelegt.

Bei der β-Bauform sind zwei Kolben 12, 15 in einem gemeinsamen Zylinder hintereinander geschaltet und stehen über ein externes Koppelgetriebe K2 in einer festen Phasenbeziehung von 90° zueinander.

Bei der γ-Bauform sind die zwei Kolben 12, 15 zueinander angewinkelt angeordnet und laufen in eigenen Zylindern.

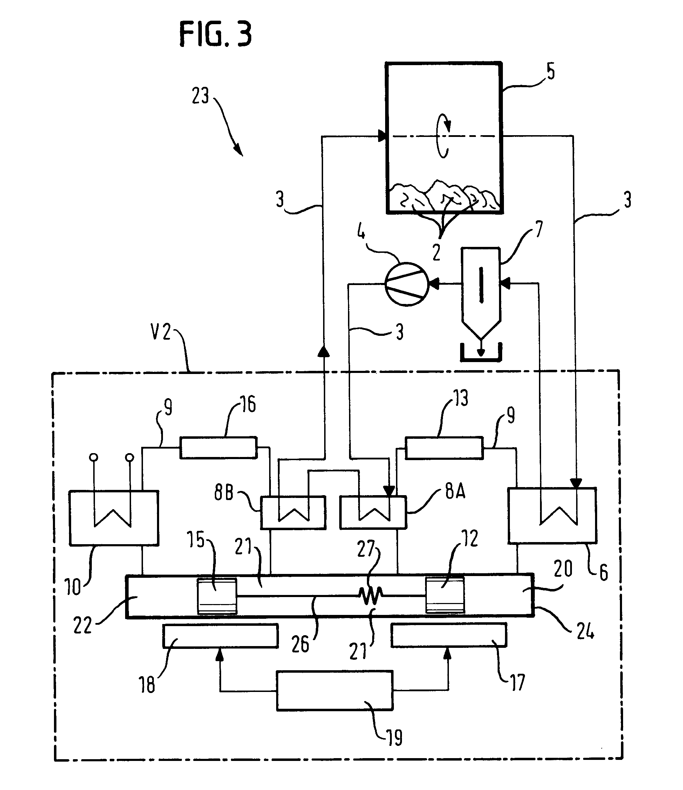

FIG 3 zeigt als Skizze eine weitere alternative Ausführungsform einer Vuilleumier-Wärmepumpe V2 für einen Wäschetrockner. Der Wäschetrockner 23 ist zur Erreichung einer Entfeuchtungsleistung von etwa 40 g Wasser pro Minute ausgelegt. Dazu ist ein Prozessluft-Volumenstrom von 180-230 m³/h vorgesehen, der eine Eintrittstemperatur in die Trommel 5 von weniger als 120°C und eine Austrittstemperatur aus der Trommel 5 von ca. 75°C realisiert.

In diesem sind, ähnlich zur β-Bauform aus FIG 2, nun der erste Kolben 12 und der zweite Kolben 15 mechanisch miteinander gekoppelt und laufen hintereinander in einem gemeinsamen Zylinder 24. Im Gegensatz zur β-Bauform aus FIG 2 wird jedoch nun auf ein Koppelgetriebe verzichtet; vielmehr sind die Kolben 12, 15 Teil eines Freikolben-Schwingsystems. Diese Ausführungsform hat sich für einen Wäschetrockner als besonderes vorteilhaft herausgestellt, unter anderem, da so der Bauraum minimiert wird Der erste, 'kalte' Kolben 12 ist speziell so ausgestaltet, dass er eine Masse zwischen 4 kg und 5 kg aufweist, während der 'heiße' Kolben zweite, eine Masse zwischen 1 kg und 1,5 kg aufweist. Die Kolben 12, 15 sind mittels einer Kolbenstange 26 verbunden. In den Lastpfad zwischen den Kolben 12, 15 ist eine Koppelfeder (Schraubendruckfeder) 27 eingebracht, deren Federkonstante hier zwischen 6 N/mm und 7 N/mm beträgt. Bei einer dynamischen Betrachtung der Vuilleumier-Wärmepumpe bilden beispielsweise die Arbeitsgasvolumina zusammen mit den weiter unten genauer beschriebenen Kolbenstangen weitere, dynamische Federelemente ('Gasfedern') aus.

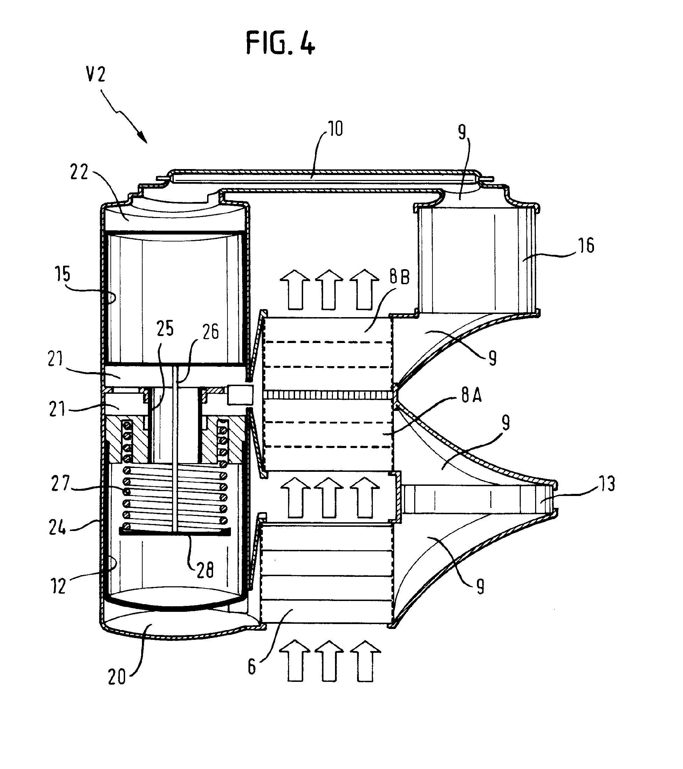

Die in FIG 1 noch getrennten warmen Arbeitsvolumina sind nun in einem einzigen warmen Arbeitsvolumen 21 zusammengeführt. Bei einem Kolbendurchmesser der Kolben 12, 15 zwischen 100 mm und 150 mm, einem Hub der Kolben 12, 15 zwischen 30 mm und 50 mm und einem Mitteldruck von ca. 30 bar bis 50 bar ergeben sich Kolbenfrequenzen der Kolben 12,15 von ca. 10 Hz bis 15 Hz. Diese Frequenzen sind für den Betriebsbereich des Wäschetrockners im wesentlichen konstant, jedoch kann sich der Kolbenhub erheblich ändern, wie weiter unten für FIG 4 genauer ausgeführt wird.

Ferner ist der zweite Wärmetauscher (Prozessluftheizer) nun in Form zweier Teil-Wärmetauscher 8A und 8B ausgeführt. Die heliumseitigen Kanäle der Aluminium-Wärmetauscher 6, 8A und 8B weisen eine Länge zwischen 100 mm und 150 mm für einen einzelnen Kanal auf. Für den kalten Wärmetauscher 6 und die beiden warmen Wärmetauscher 8A und 8B sind dann, abhängig vom Durchmesser eines einzelnen Kanals zwischen hier 1,5 mm und 2,5 mm, je 500 bis 1000 Kanäle vorgesehen. Die luftseitigen Lamellen der Wärmetauscher 6, 8A bzw. 8B sind für die notwendigen Übertragungsleistungen so ausgelegt, dass die Strömungsverluste aufgrund der Wärmetauscher 6, 8A bzw. 8B kleiner als 250 Pa bleiben.

Die Regeneratoren 13, 16 sind hier so ausgelegt, dass eine Länge des kalte Regenerators 13 - bei einem Durchmesser von 80 mm bis 150 mm - 30 mm bis 50 mm nicht überschreitet (unter Annahme eines Faserdurchmessers von 40 µm bis 70 µm) und der warme Regenerator 16 eine Länge von 80 mm bis 120 mm (bei einem Faserdurchmesser von 50 µm bis 100 µm) nicht übersteigt.

Das heiße Volumen 22 der Wärmepumpe V2 liegt hier auf einem Temperaturniveau von über 500°C. Am Kondensator 6 liegen beim normalen Betrieb prozesslufteinlassseitig Wandtemperaturen einer Aluminiumtrennwand zwischen einem Prozessluftbereich und einem Arbeitsgasbereich von 70°C an, am ersten Teil-Heizer bzw. Teil-Wärmetauscher 8A entsprechende Wandtemperaturen von 110°C bis 120°C und am zweiten Teil-Heizer bzw. Teil-Wärmetauscher 8B von 120°C bis 130°C.

Der Antrieb 17,18,19 dient nur dazu, das System in seinen Betriebszustand hochzufahren und ggf. Reibungsverluste auszugleichen. Jedoch kann, insbesondere bei ausreichend geringen Reibungsverlusten, auch auf den Antrieb verzichtet werden.

FIG 4 zeigt in Aufsicht eine mögliche Implementierung der Wärmepumpe V2 aus FIG 3. Die mechanische Verbindung zwischen den Kolben 12, 15 ist im einzelnen so ausgestaltet, dass die am 'heißen' Kolben 15 befestigte Kolbenstange 26 in den kalten Kolben 12 reicht und dort in einem Tellersitz bzw. Deckel 28 endet. Auf dem Tellersitz 28 sitzt die als Schraubendruckfeder ausgestaltete Koppelfeder 27, welche an ihrer gegenüberliegenden Seite an einer Stirnseite des kalten Kolbens 12 innenliegend aufsitzt.

Diese Ausgestaltung des Freikolben-Schwingsystems, insbesondere mit hoher Masse des kalten Kolbens 12 (hier: 4 kg bis 5 kg) und geringerer Masse des heißen Kolbens 15 (hier: 1 kg bis 1,5 kg), ergibt den überraschenden Effekt, dass eine Trockenleistung vorteilhafterweise besonders wirksam an einen Trocknungsgrad und / oder Beladungsgrad anpassbar ist. Denn die Temperaturdifferenz zwischen kaltem Arbeitsvolumen 20 und warmen Arbeitsvolumen 21 vergrößert sich mit niedrigerer Beladung und steigendem Trocknungsgrad. Es wird nun erreicht, dass der Kolbenhub sich verkleinert, so dass sich auch die Trocknungsleistung der Wärmepumpe verringert. Dies steht im direkten Widerspruch zum gewünschten bisherigen Verhalten bekannter Vuilleumier-Anwendungen, wie z. B. im Heizungsbau, bei denen bei höherer Temperaturdifferenz auch eine höhere Wärmepumpenleistung angestrebt wird.

An einer Wand des Zylinders 24 im Bereich des warmen Arbeitsvolumens 21 ist ein Volumenelement in Form eines sog. Arbeitszylinders 25 stationär befestigt. Der Arbeitszylinder 25 taucht, je nach Lage des kalten Verdrängerkolbens 12, mehr oder weniger in den kalten Verdrängerkolben 12 ein. Dazu weist der kalte Verdrängerkolben 12 eine entsprechende Ausnehmung auf (ohne Bezugszeichen), in welcher der Arbeitszylinder 25 dicht (d. h., ohne oder mit nur geringer bzw. vernachlässigbarer Spaltleckage) geführt wird. Bei einer Hubbewegung des kalten Verdrängerkolbens 12 ändert sich dadurch das für den Vuilleumier-Prozess zur Verfügung stehende Arbeitsvolumen entsprechend. Folglich wird (p,V)-Arbeit geleistet, welche dazu dient, Reibungsverluste der Vuilleumier-Wärmepumpe auszugleichen. Zum Erhalt der Gesamtenergiebilanz muss der Heizer, der hier in Form eines im Arbeitsgaskanal angeordneten Heizstabs 10 vorliegt, stärker geheizt werden als bei einem verlustfreien Vuilleumier-Prozess. Die Verwendung eines Heizers 10 beim Vuilleumier-Prozess erscheint zunächst aufgrund der Umwandlungsverluste von Strom in Wärmeenergie nachteiliger als ein direkter elektrisch-mechanischer Antrieb, wie er z. B. für einen Stirlingmotor verwendet wird. Jedoch ist die Verwendung eines Heizstabs 10 weitaus preiswerter und verlässlicher als ein Antriebsmotor mit dem dazu benötigten Getriebe und wirft auch keine Wärmeverluste auf.

Der Durchmesser des Arbeitszylinders 25 liegt zwischen 40 mm und 50 mm. Die Kolbenstange 26 wird durch den Arbeitszylinder 25 geführt. Der Arbeitskörper 25 kann im volumetrischen Sinne auch als Kolbenstange 25 des kalten Verdrängerkolbens 12 verstanden werden.

Seitlich zum Zylinder 24 versetzt sind die Wärmetauscher 6, 8A, 8B in einer für die Prozessluft geraden Linie (linear) hintereinander angeordnet. Die Wärmetauscher 6, 8A, 8B sind also bezüglich der Verdrängerkolben 12, 15 asymmetrisch (einseitig) angeordnet. Die Führung der Prozessluft ist durch die Pfeile angedeutet, wobei die aus der Trommel austretende feuchtwarme Prozessluft zunächst zur Auskondensation durch den Kondensator 6 und danach zur Erwärmung durch die beiden Teil-Wärmetauscher 8A und 8B geführt wird. Die Regeneratoren 13, 16 liegen kollinear zueinander noch weiter seitlich versetzt. Die Lage des Zylinders 24, der Wärmetauscher 6, 8A, 8B und der Regeneratoren ist somit im Wesentlichen koplanar. Durch diese Prozessluftführung lässt sich ein luftwiderstandsreduziertes und bauraumoptimiertes Strömungsverhalten erreichen. Eine grundsätzlich koplanare Bauweise ist auch bei nicht-linearer, z. B. achsenparalleler oder angewinkelter, Anordnung der Kolben 12, 15, der Wärmetauscher 6, 8A, 8B und / oder der Regeneratoren 13, 16 vorteilhaft. Die gezeigte Bauform unterscheidet sich erheblich von bekannten Bauformen, z. B. aus dem Heizungsbau, bei denen Flüssigkeits/Flüssigkeits-Wärmetauscher üblicherweise um die Arbeitsvolumina herum, und diese somit umgebend, gelegt werden.

Eine Einstellung einer Phasenverschiebung der Kolben 12, 15 von ca. 90° kann mittels, unter anderem, einer Dimensionierung von Federkonstanten des Systems (mechanische Feder 27 oder Gasfeder) und der Querschnitte der Kolbenstangen 25,26 erreicht werden. Dabei können Verluste mitberücksichtigt werden.

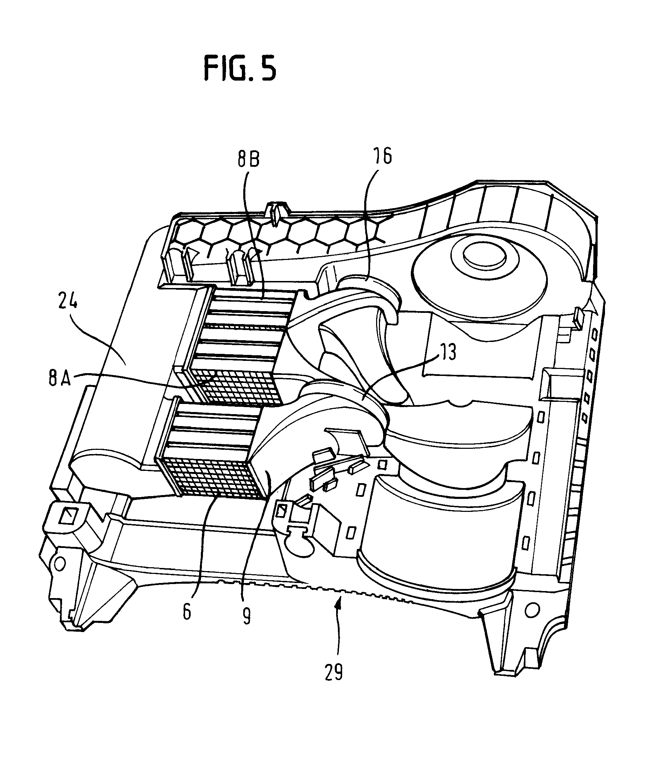

FIG 5 zeigt eine Bodengruppe 29 für einen Wäschetrockner nach dem in FIG 3 und FIG 4 dargestellten Vuilleumier-Aufbau. Die Bodengruppe 29 zeigt den Kondensator 6, die beiden Teil-Wärmetauscher 8A und 8B, einen Teil des Arbeitsgaskanals 9, den ersten Regenerator 13 und den zweiten Regenerator 16 und den Zylinder 14. Die gezeigte Wärmepumpe mit Freikolben-Schwingsystem ist bauraumminimiert und nicht größer als 450 x 450 mm.

Bei dieser bauraumgerechten Dimensionierung der Wärmepumpe ist mit ca. 800 W bis 1000 W Wärmerückgewinnung eine Heizleistung zwischen ca. 2000 W bis 2500 W für die angestrebte Entfeuchtung realisierbar. Mit dieser Kondensationsleistung wird ein Trocknungsprozess der Energieeffizienzklasse A erreicht; jedoch wird für die Erfüllung der Kondensationsrate ein (nicht dargestellter) Zusatzwärmetauscher verwendet. Da die Kühlleistung des Zusatzwärmetauschers kleiner als 800 W ist, kann er sehr klein sein und beispielsweise zusätzlich in der Bodengruppe oder auch im Türbereich angeordnet sein. Als Zusatzwärmetauscher sind jegliche bekannte geeignete Bauformen von Wärmetauschern einsetzbar. Der Zusatzwärmetauscher kann beispielsweise zwischen dem kalten Wärmetauscher und dem warmen Wärmetauscher angeordnet sein. Er kann aber auch im Prozessluftkanal nach der Trommel und vor der Wärmepumpe angeordnet sein und dann beispielsweise auch als Flusenfalle wirken.

Bei dem beschriebenen Wärmepumpentrockner ist z. B. Helium als natürliches, umweltneutrales, nicht brennbares und nicht toxisches Arbeitsgas einsetzbar. Er erreicht eine gleiche Entfeuchtungsleistung wie ein bekannter Kondensationstrockner unter Einhaltung der Energieeffizienzklasse A.

Selbstverständlich ist die vorliegende Erfindung nicht auf die gezeigten Ausführungsformen beschränkt.

So ist statt eines Freikolben-Schwingsystems eine Verwendung eines Koppelgetriebes möglich, z. B. nach den in FIG 2 gezeigten α-, β- oder γ-Grundformen mit einem gemeinsamen Koppelgetriebe K1, K2 bzw. K3. Die Koppelgetriebe können dabei extern zu den Kolbenzylindern angeordnet sein oder im Arbeitsgasvolumen. So ist eine angewinkelte Anordnung der Kolben, insbesondere 90°-Anordnung darstellbar, z. B. mit mittigem Koppelgetriebe.

Eine angewinkelte Anordnung der Kolben macht einerseits die Luftführung mit der Platzierung der Wärmetauscher und Regeneratoren komplizierter, lässt aber den Zusatzwärmetauscher leichter in der Bodengruppe unterbringen.

Falls die Dimensionierung der Wärmepumpe mit ihrer Kolbenfrequenz auf einen stationären Betrieb des Trockners mit voller Beladung ausgelegt ist, kann das Erreichen der stationären Phase oder die Trocknung bei Unterbeladung problematisch sein. Um dies zu vermeiden, werden Reibungsverluste mittels eines drehzahlgeregelten Antriebs des Koppelgetriebes ausgeglichen und die Kolbenfrequenz an einen instationären Betrieb und Teillastbetrieb angepasst. Die Wärmepumpe arbeitet so in unterschiedlichen Betriebszuständen in einem optimalen Arbeitspunkt.

Ferner kann beispielsweise eine weitere Feder (z. B. eine mechanische oder Gasfeder) zur Positionsfestlegung der Kolben im Kolbengehäuse verwendet werden.

Auch kann das Prozessluftgebläse an anderer Stelle im Prozessluftkanal angeordnet sein, z. B. direkt vor Eintritt der Prozessluft in die Trommel oder vor einem Prozessluftheizer.

Auch kann als umweltfreundliches Arbeitsgas statt Helium z. B. Wasserstoff eingesetzt werden.

Das Hausgerät kann z. B. als Einzeltrockner oder Vollwaschtrockner ausgeführt sein, aber auch z. B. als Geschirrspüler vorliegen.

### Bezugszeichenliste

- 1: Hausgerät
- 2: Wäscheposten
- 3: Prozessluftkanal
- 4: Gebläse
- 5: Wäschetrommel
- 6: Erster Wärmetauscher, Kondensator
- 7: Feuchtigkeitsabscheider
- 8: Zweiter Wärmetauscher, Heizer
- 8A: Erster Teil-Heizer
- 8B: Zweiter Teil-Heizer
- 9: Arbeitsgaskanal
- 10: Heizer für Arbeitsgas
- 11: Erster Zylinder
- 12: Erster Kolben
- 13: Erster Wärmespeicher, erster Regenerator
- 14: Zweiter Zylinder
- 15: Zweiter Kolben
- 16: Zweiter Wärmespeicher oder zweiter Regenerator
- 17: Erster Linearantrieb
- 18: Zweiter Linearantrieb
- 19: Steuereinrichtung
- 20: Kaltes Arbeitsvolumen
- 21: Warmes Arbeitsvolumen
- 22: Heißes Arbeitsvolumen
- 23: Wäschetrockner
- 24: Zylinder
- 25: Arbeitszylinder
- 26: Verbindungsstange
- 27: Federelement
- 28: Tellersitz
- 29: Bodengruppe
- V1: Vuilleumier-Wärmepumpe
- V2: Vuilleumier-Wärmepumpe

## Patentansprüche

1. Hausgerät (1;23) zum Trocknen eines feuchten Gutes (2) mittels eines in eine Prozessluftkanal (3) führbaren Prozessluftstroms, durch welchen durchströmbar sind:
- eine Behandlungskammer (5) mit dem Gut (2),
- eine Kühlanordnung (6,7) zum Abkühlen und Auskondensieren des Prozessluftstroms (3) nach Durchströmen der Behandlungskammer (5), wobei die Kühlanordnung (6,7) einen ersten Wärmetauscher (6) aufweist, durch welchen Wärme aus dem Prozessluftstrom einem Arbeitsfluid zuführbar ist, und nachgeschaltet
- eine Heizanordnung (8;8A,8B) zum Erwärmen des Prozessluftstroms vor Durchströmen der Behandlungskammer (5), wobei die Heizanordnung (8) einen zweiten Wärmetauscher (8) aufweist, durch welchen dem Prozessluftstrom aus dem Arbeitsfluid Wärme zuführbar ist, wobei
- das Arbeitsfluid in einer Wärmepumpe (V1 ;V2) geführt wird, die nach einem regenerativen Gaskreisprozess arbeitet und mindestens zwei Verdrängerkolben (12,15) aufweist,
**dadurch gekennzeichnet, dass**
der regenerative Gaskreisprozess einen Vuilleumier-Gaskreisprozess umfasst und mindestens zwei der Verdrängerkolben (12, 15) mechanisch gekoppelt sind.

2. Hausgerät (1;23) nach Anspruch 1, **dadurch gekennzeichnet, dass** zwei der Verdrängerkolben (12,15) als Teil eines Freikolben-Schwingsystems ausgebildet sind.

3. Hausgerät (1;23) nach Anspruch 2, **dadurch gekennzeichnet, dass** die Verdrängerkolben (12,15) über ein Federelement (27) gekoppelt sind.

4. Hausgerät (1;23) nach Anspruch 3, **dadurch gekennzeichnet, dass** das Federelement (27) eine Federkonstante zwischen 3 N/mm und 15 N/mm, insbesondere zwischen 6 N/mm und 7 N/mm, aufweist.

5. Hausgerät (1;23) nach Anspruch 3 oder 4, **dadurch gekennzeichnet, dass** das Federelement (27) in einem ersten, kalten Verdrängerkolben (12) aufgenommen ist.

6. Hausgerät (1;23) nach einem der Ansprüche 2 bis 5, **dadurch gekennzeichnet, dass** ein erster, kalter Verdrängerkolben (12) ein Gewicht zwischen 3 Kg und 6 Kg, insbesondere zwischen 4 Kg und 5 Kg, aufweist.

7. Hausgerät (1;23) nach einem der Ansprüche 2 bis 6, **dadurch gekennzeichnet, dass** ein zweiter, heißer Verdrängerkolben (15) ein Gewicht zwischen 1 Kg und 2 Kg aufweist.

8. Hausgerät (1;23) nach einem der Ansprüche 2 bis 7, **dadurch gekennzeichnet, dass** ein Kolbendurchmesser der Verdrängerkolben (12,15) zwischen 75 mm und 200 mm, insbesondere zwischen 100 mm und 150 mm, beträgt.

9. Hausgerät (1;23) nach einem der Ansprüche 2 bis 8, **dadurch gekennzeichnet, dass** ein Kolbenhub der Verdrängerkolben (12,15) zwischen 25 mm und 75 mm, insbesondere zwischen 30 mm und 50 mm, beträgt.

10. Hausgerät (1;23) nach einem der Ansprüche 2 bis 9, **dadurch gekennzeichnet, dass** ein Mitteldruck an den Verdrängerkolben (12,15) zwischen 20 bar und 75 bar, insbesondere zwischen 30 bar und 50 bar, beträgt.

11. Hausgerät (1;23) nach einem der Ansprüche 2 bis 10, **dadurch gekennzeichnet, dass** ein erster, kalter Verdrängerkolben (12) eine Aussparung zur zumindest teilweisen Aufnahme eines in einem Arbeitsvolumen (21) ortfest angeordneten Körpers (25) aufweist, wobei der Körper (25) in Abhängigkeit von einem Hub des kalten Verdrängerkolbens (12) in die Aussparung eintaucht.

12. Hausgerät (1;23) nach Anspruch 11, **dadurch gekennzeichnet, dass** der Körper (25) eine zylindrische Grundform aufweist, insbesondere mit einem Durchmesser zwischen 25 mm und 75 mm, speziell zwischen 40 mm und 50 mm.

13. Hausgerät nach Anspruch 1, **dadurch gekennzeichnet, dass** die Verdrängerkolben (12,15) mittels eines Koppelgetriebes (K1;K2;K3) miteinander gekoppelt sind.

14. Hausgerät nach Anspruch 13, **dadurch gekennzeichnet, dass** Koppelgetriebe extern antreibbar ist.

15. Hausgerät nach Anspruch 14, **dadurch gekennzeichnet, dass** Koppelgetriebe drehzahlgeregelt antreibbar ist.

16. Hausgerät (1;23) nach einem der vorhergehenden Ansprüche, **dadurch gekennzeichnet, dass** die Verdrängerkolben (12,15) in einem gemeinsamen Zylinder (24) laufen.

17. Hausgerät (1;23) nach einem der vorhergehenden Ansprüche, **dadurch gekennzeichnet, dass** die Verdrängerkolben (12,15) kollinear laufen.

18. Hausgerät (1;23) nach einem der vorhergehenden Ansprüche, **dadurch gekennzeichnet, dass** die Kolben (12,15) in einer Bodengruppe (29) angeordnet sind.

19. Verfahren zum Trocknen eines feuchten Gutes (2) mittels eines in einem Prozessluftkanal geführten Prozessluftstroms, durch welchen Prozessluftstrom eine Behandlungskammer (5) mit dem Gut (2), eine Kühlanordnung (6,7) zum Abkühlen des Prozessluftstroms (3) und Auskondensieren von Feuchtigkeit aus dem Prozessluftstrom nach Durchströmen der Behandlungskammer (5) und eine Heizanordnung (8) zum Erwärmen des Prozessluftstroms vor Durchströmen der Behandlungskammer (5) durchströmt werden, wobei in der Kühlanordnung (6,7) Wärme aus dem Luftstrom einem Arbeitsfluid zugeführt wird, und in der Heizanordnung (8,9) Wärme aus dem Arbeitsfluid dem Prozessluftstrom zugeführt wird, wobei das Arbeitsfluid in einem regenerativen Gaskreisprozess geführt wird, welcher mindestens zwei miteinander mechanisch gekoppelte Verdrängerkolben (12,15) antreibt,
**dadurch gekennzeichnet, dass**
der regenerative Gaskreisprozess einen Vuilleumier-Gaskreisprozess umfasst.

20. Verfahren nach Anspruch 19, **dadurch gekennzeichnet, dass** die Verdrängerkolben (12,15) sich als Teil eines Freikolben-Schwingsystems bewegen.

21. Verfahren nach Anspruch 19 oder 20, **dadurch gekennzeichnet, dass** die Verdrängerkolben (12,15) mittels eines Koppelgetriebes (K1;K2;K3) angetrieben werden, insbesondere drehzahlgeregelt.

## Claims

1. Domestic appliance (1; 23) for drying a damp product (2) by means of a process air stream that can be conducted in a process air channel (3), said stream able to flow through
- a treatment chamber (5) comprising the product (2),
- a cooling assembly (6, 7) for cooling and condensing the process air stream (3) once the latter has passed through the treatment chamber (5), the cooling assembly (6, 7) having a first heat exchanger (6), by means of which heat from the process air stream can be supplied to a working fluid, and connected downstream
- a heating assembly (8;8A,8B) for heating the process air stream before the latter flows through the treatment chamber (5), said heating assembly (8) having a second heat exchanger (8), by means of which heat from the working fluid can be supplied to the process air stream,
- the working fluid is conducted in a heat pump (V1;V2), which operates according to a regenerative gas cycle process and has at least two displacement pistons (12,15),
**characterised in that**
the regenerative gas cycle process comprises a Vuilleumier gas cycle process and at least two of the displacement pistons (12, 15) are mechanically coupled.

2. Domestic appliance (1;23) according to claim 1, **characterised in that** two of the displacement pistons (12,15) are constructed as part of a free-piston vibrating system.

3. Domestic appliance (1;23) according to claim 2, **characterised in that** the displacement pistons (12,15) are coupled via a spring element (27).

4. Domestic appliance (1 ;23) according to claim 3, **characterised in that** the spring element (27) has a spring constant between 3 N/mm and 15 N/mm, in particular between 6 N/mm and 7 N/mm.

5. Domestic appliance (1 ;23) according to claim 3 or 4, **characterised in that** the spring element (27) is received in a first, cold displacement piston (12).

6. Domestic appliance (1;23) according to one of claims 2 to 5, **characterised in that** a first, cold displacement piston (12) has a weight between 3 kg and 6 kg, in particular between 4 kg and 5 kg.

7. Domestic appliance (1;23) according to one of claims 2 to 6, **characterised in that** a second, hot displacement piston (15) has a weight between 1 kg and 2 kg.

8. Domestic appliance (1;23) according to one of claims 2 to 7, **characterised in that** a piston diameter of the displacement pistons (12,15) is between 75 mm and 200 mm, in particular between 100 mm and 150 mm.

9. Domestic appliance (1;23) according to one of claims 2 to 8, **characterised in that** a piston stroke of the displacement pistons (12,15) is between 25 mm and 75 mm, in particular between 30 mm and 50 mm.

10. Domestic appliance (1;23) according to one of claims 2 to 9 **characterised in that** a middle pressure on the displacement pistons (12, 15) is between 20 bar and 75 bar, in particular between 30 bar and 50 bar.

11. Domestic appliance (1;23) according to one of claims 2 to 10, **characterised in that** a first, cold displacement piston (12) has a recess for at least partially receiving a body (25) that is fixedly arranged in a working volume (21), the body (25) immersing into the recess as a function of a stroke of the cold displacement piston (12).

12. Domestic appliance (1;23) according to claim 11, **characterised in that** the body (25) has a cylindrical basic shape, in particular with a diameter between 25 mm and 75 mm, specifically between 40 mm and 50 mm.

13. Domestic appliance according to claim 1, **characterised in that** the displacement pistons (12,15) are coupled to each other by means of a coupler mechanism (K1;K2;K3).

14. Domestic appliance according to claim 13, **characterised in that** the coupler mechanism can be externally driven.

15. Domestic appliance according to claim 14, **characterised in that** the coupler mechanism can be driven in a speed-controlled manner.

16. Domestic appliance (1 ;23) according to one of the preceding claims, **characterised in that** the displacement pistons (12,15) run in a common cylinder (24).

17. Domestic appliance (1;23) according to one of the preceding claims, **characterised in that** the displacement pistons (12,15) run collinearly.

18. Domestic appliance (1;23) according to one of the preceding claims, **characterised in that** the pistons (12,15) are arranged in a bottom group structure (29).

19. Method for drying a damp product (2) by means of a process air stream conducted in a process air channel, said process air stream flowing though a treatment chamber (5) comprising the product (2), a cooling assembly (6,7) for cooling the process air stream (3) and condensing moisture from the process air stream once the latter has passed through the treatment chamber (5), and a heating assembly (8) for heating the process air stream before the latter flows through the treatment chamber (5), heat from the air stream being supplied to a working fluid in the cooling assembly (6,7) and heat from the working fluid being supplied to the process air stream in the heating assembly (8,9), the working fluid being conveyed in a regenerative gas cycle process which drives at least two displacement pistons (12,15) that are mechanically coupled to each other,
**characterised in that**
the regenerative gas cycle process comprises a Vuilleumier gas cycle process.

20. Method according to claim 19, **characterised in that** the displacement pistons (12,15) move as part of a free-piston vibrating system.

21. Method according to claim 19 or 20, **characterised in that** the displacement pistons (12,15) are driven by means of a coupler mechanism (K1;K2;K3), in particular in a speed-controlled manner.

## Revendications

1. Appareil ménager (1; 23) destiné au séchage d'un produit humide (2) au moyen d'un courant d'air de processus pouvant être guidé dans un canal d'air de processus (3), au moyen duquel courant d'air de processus peuvent être traversés :
- une chambre de traitement (5) comprenant le produit (2),
- un dispositif de refroidissement (6, 7) destiné à refroidir et faire condenser le courant d'air de processus (3) après le passage à travers la chambre de traitement (5), le dispositif de refroidissement (6, 7) présentant un premier échangeur de chaleur (6), au moyen duquel la chaleur provenant du courant d'air de processus peut être amenée à un fluide de travail, et présentant en aval un dispositif de chauffage (8 ; 8A, 8B) destiné à échauffer le courant d'air de processus avant le passage à travers la chambre de traitement (5), le dispositif de chauffage (8) présentant un deuxième échangeur de chaleur (8) au moyen duquel la chaleur provenant du fluide de travail peut être amenée au courant d'air de processus,
- le fluide de travail étant guidé dans une pompe à chaleur (V1 ; V2) qui travaille selon un processus à circuit de gaz régénératif et présente au moins deux pistons de déplacement (12, 15),
**caractérisé en ce que** le processus à circuit de gaz régénératif comprend un processus à circuit de gaz Vuilleumier et **en ce qu'**au moins deux des pistons de déplacement (12, 15) sont couplés mécaniquement.

2. Appareil ménager (1 ; 23) selon la revendication 1, **caractérisé en ce que** deux des pistons de déplacement (12, 15) sont réalisés comme partie d'un système oscillant à pistons libres.

3. Appareil ménager (1 ; 23) selon la revendication 2, **caractérisé en ce que** les pistons de déplacement (12, 15) sont couplés par l'intermédiaire d'un élément à ressort (27).

4. Appareil ménager (1 ; 23) selon la revendication 3, **caractérisé en ce que** l'élément à ressort (27) présente une constante de ressort comprise entre 3 N/mm et 15 N/mm, notamment entre 6 N/mm et 7 N/mm.

5. Appareil ménager (1 ; 23) selon la revendication 3 ou 4, **caractérisé en ce que** l'élément à ressort (27) est logé dans un premier piston de déplacement froid (12).

6. Appareil ménager (1 ; 23) selon l'une quelconque des revendications 2 à 5, **caractérisé en ce qu'**un premier piston de déplacement froid (12) présente un poids compris entre 3 kg et 6 kg, notamment entre 4 kg et 5 kg.

7. Appareil ménager (1 ; 23) selon l'une quelconque des revendications 2 à 6, **caractérisé en ce qu'**un deuxième piston de déplacement chaud (15) présente un poids compris entre 1 kg et 2 kg.

8. Appareil ménager (1 ; 23) selon l'une quelconque des revendications 2 à 7, **caractérisé en ce qu'**un diamètre de piston des pistons de déplacement (12, 15) est compris entre 75 mm et 200 mm, notamment entre 100 mm et 150 mm.

9. Appareil ménager (1 ; 23) selon l'une quelconque des revendications 2 à 8, **caractérisé en ce qu'**une course de piston des pistons de déplacement (12, 15) est comprise entre 25 mm et 75 mm, notamment entre 30 mm et 50 mm.

10. Appareil ménager (1 ; 23) selon l'une quelconque des revendications 2 à 9, **caractérisé en ce qu'**une pression moyenne sur les pistons de déplacement (12, 15) est comprise entre 20 bars et 75 bars, notamment entre 30 bars et 50 bars.

11. Appareil ménager (1 ; 23) selon l'une quelconque des revendications 2 à 10, **caractérisé en ce qu'**un premier piston de déplacement froid (12) présente un évidement pour le logement au moins partiel d'un corps (25) disposé de manière stationnaire dans un volume de travail (21), le corps (25) plongeant dans l'évidement en fonction d'une course du piston de déplacement froid (12).

12. Appareil ménager (1 ; 23) selon la revendication 11, **caractérisé en ce que** le corps (25) présente une forme de base cylindrique, notamment avec un diamètre compris entre 25 mm et 75 mm, particulièrement entre 40 mm et 50 mm.

13. Appareil ménager selon la revendication 1, **caractérisé en ce que** les pistons de déplacement (12, 15) sont couplés entre eux au moyen d'un engrenage couplé (K1 ; K2 ; K3).

14. Appareil ménager selon la revendication 13, **caractérisé en ce que** l'engrenage couplé peut être entraîné de manière externe.

15. Appareil ménager selon la revendication 14, **caractérisé en ce que** l'engrenage couplé peut être entraîné par régulation de vitesse.

16. Appareil ménager (1 ; 23) selon l'une quelconque des revendications précédentes, **caractérisé en ce que** les pistons de déplacement (12, 15) se déplacent dans un cylindre commun (24).

17. Appareil ménager (1 ; 23) selon l'une quelconque des revendications précédentes, **caractérisé en ce que** les pistons de déplacement (12, 15) se déplacent de manière colinéaire.

18. Appareil ménager (1 ; 23) selon l'une quelconque des revendications précédentes, **caractérisé en ce que** les pistons de déplacement (12, 15) sont disposés dans un élément de sol (29).

19. Procédé de séchage d'un produit humide (2) au moyen d'un courant d'air de processus pouvant être guidé dans un canal d'air de processus, au moyen duquel courant d'air de processus sont traversés une chambre de traitement (5) comprenant le produit (2), un dispositif de refroidissement (6, 7) destiné à refroidir le courant d'air de processus (3) et faire condenser l'humidité provenant du courant d'air de processus après le passage à travers la chambre de traitement (5) et un dispositif de chauffage (8) destiné à échauffer le courant d'air de processus avant le passage à travers la chambre de traitement (5), dans le dispositif de refroidissement (6, 7) la chaleur provenant du courant d'air étant amenée à un fluide de travail, et dans le dispositif de chauffage (8, 9) la chaleur provenant du fluide de travail étant amenée au courant d'air de processus, le fluide de travail étant guidé dans un processus à circuit de gaz régénératif, lequel présente au moins deux pistons de déplacement (12, 15) couplés entre eux mécaniquement,
**caractérisé en ce que**
le processus à circuit de gaz régénératif comprend un processus à circuit de gaz Vuilleumier.

20. Procédé selon la revendication 19, **caractérisé en ce que** les pistons de déplacement (12, 15) se déplacent en tant que partie d'un système oscillant à pistons libres.

21. Procédé selon la revendication 19 ou 20, **caractérisé en ce que** les pistons de déplacement (12, 15) sont entraînés au moyen d'un engrenage couplé (K1 ; K2 ; K3), notamment par régulation de vitesse.
